# EUROPEAN PATENT SPECIFICATION

(11) **EP 2 814 366 B1**
(45) Date of publication and mention of the grant of the patent: **20.04.2016**
(21) Application number: 12704775.1
(22) Date of filing: 15.02.2012
(51) Int. Cl.: A47J 43/07

(54) **MIXER HOUSEHOLD APPLIANCE**
HAUSHALTSMIXER
APPAREIL MÉNAGER MÉLANGEUR

(43) Date of publication of application: 24.12.2014
(73) Proprietor: Aktiebolaget Electrolux, 105 45 Stockholm (SE)
(72) Inventor: Holm, Henrik, S-10545 Stockholm (SE)
(74) Representative: Selin Wretblad, Eva
(86) International application number: PCT/EP2012/052598
(87) International publication number: WO 2013/120520

(56) References cited:
- WO-A1-2004/080252
- WO-A1-2006/092500
- WO-A2-02/38011
- US-A- 3 346 029
- US-A1- 2004 264 294
- US-A1- 2005 207 271
- US-A1- 2007 041 268

## Description

### TECHNICAL FIELD

The present invention relates to a mixer household appliance generally used for mixing, blending, and/or cutting foodstuff.

### BACKGROUND

A mixer household appliance for mixing, blending, and/or cutting foodstuff commonly comprises two units, a base unit comprising an electric motor and forming a support for the appliance, and a container unit comprising a container for the foodstuff and a rotor element arranged in the container. The container unit is provided with a lid covering an opening of the container. Such an appliance may be referred to under different names such as *inter alia* mixer, food mixer, blender, or food blender. The rotor element is rotated by means of the electric motor. The base unit and the container unit are separable from each other and a separable coupling arrangement is provided between the electric motor and the rotor element.

During operation noise is emitted from a mixer appliance. Noise emanates from various parts and positions of the mixer appliance, e.g. the electric motor, the separable connection, the rotor element, and foodstuff being mixed or cut by the rotor element.

Various solutions have been proposed to reduce the noise level emitted from a mixer. For instance, each of US 2005/152215 and US 2003/034200 proposes an enclosure enclosing the container unit of a blender.

JP 40730232 A discloses a vessel for a food mixer, with improved thermal and sound insulating properties. A vessel main-body comprises an external wall layer and an internal wall layer with an air layer therebetween.

WO 2006/092500 relates to a blender-type electrical cooking appliance comprising a container, the base of which is equipped with an operating tool which is rotated by a motor. The container is closed by a cover which is provided with an opening that can be used to insert a stirrer such that a lower concave deflector of the stirrer is disposed close to the operating tool. Positioned close to the operating tool, the concave deflector pushes foodstuff towards the operating tool. Alternatively, the stirrer may be used as a scraper for pushing food stuff from a top to a base of the container.

A further reduction of noise emitted from a mixer household appliance and/or alternative ways of reducing noise emitted from a mixer household appliance are desirable.

### SUMMARY

An object of the present invention is to provide a mixer household appliance with a low noise level.

According to an aspect of the invention, the object is achieved by a mixer household appliance comprising a container unit and a base unit. The base unit comprises a housing and an electric motor. The container unit comprises a container for foodstuff and a rotor element arranged inside the container at a first end of the container unit. The electric motor is arranged to rotate the rotor element about an axis. The appliance further comprises a lid for at least partially covering an opening at a second end of the container unit and a device. The device extends into the container via the lid and comprises a surface element extending in a direction substantially perpendicularly to the axis. The device is arranged to be fixedly positioned in at least a first position and a second position. In the first position of the device the surface element is arranged at a first distance from the rotor element inside the container. In the second position of the device the surface element is arranged at a second distance from the rotor element inside the container.

It has been realized by the inventor that noise emanating from the rotor element during mixing, blending, or cutting foodstuff is transmitted via a cone of air inside a vortex formed in the foodstuff being rotated by the rotor element. Further, it has been discovered by the inventor that closing off at least part of the vortex reduces noise emitted from the rotor element to an ambient environment of the appliance.

Since the device comprises a surface element, which is arranged to be positioned in at least two different positions inside the container, the surface element is able to be positioned to cover a lower part of a vortex to reduce noise transmitted via the cone of air of the vortex. The size of the vortex may vary depending on amount and type of foodstuff being mixed, blended, and/or cut. Accordingly, an adjustable repositionable device comprising a surface element is required to achieve noise reduction under at least some different operating conditions. As a result, the above mentioned object is achieved.

It is remarked with respect to WO 2006/092500 that the concave deflector does not close off any vortex formed in the appliance since the concave deflector is arranged to push foodstuff towards the operating tool. This can only be achieved if the concave deflector is positioned within the foodstuff, i.e. below any vortex formed.

The base unit may form a support of the appliance, which base unit is placed upon a supporting surface during use of the appliance. The rotor element may form part of a rotor arranged in the container unit. The rotor element may comprise a cutting element. The container unit may be removable form the base unit. A coupling arrangement may be provided between the electric motor and the rotor element to form a separable connection between the electric motor and the rotor element. The container unit may comprise a sleeve at its first end. A free end of the sleeve may form a bottom surface, upon which the container unit may stand when the container unit is not connected to the base unit. The coupling arrangement may form a direct connection between the rotor and the motor, i.e. the rotor may be directly driven by the electric motor. A transmission may be arranged between the electric motor and the rotor.

During use of the mixer appliance, a vortex may form in the foodstuff being mixed, blended, and/or cut by means of the rotor element rotating inside the container, if the foodstuff has a sufficiently liquid consistency. A user may position the device of the appliance in one of the first and second positions to cover the vortex or a lower portion of the vortex. That is, the surface element is positioned to close off the vortex or the lower portion of the vortex by an edge portion of the surface element touching the foodstuff above the vortex or from within the rotating cone-shaped vortex.

According to embodiments, in the first position and in the second position of the device the surface element may be arranged along the axis. In this manner the surface element may easily be centred within a vortex formed in the container.

According to embodiments, the device may comprise a shaft and the lid may comprise a through hole. The shaft may extend through the through hole. The shaft may be movably arranged in the through hole. In this manner the shaft may be positioned in the first position and the second position in the through hole.

According to embodiments, the shaft may be arranged with a press fit in the through hole. In this manner the device may be fixedly positioned in the first position and the second position in the through hole by means of the press fit between the shaft and the through hole.

According to embodiments, the shaft may be foldable. In this manner the shaft may be folded to reduce the height of the appliance during storing.

According to embodiments, the surface element may be substantially circular with a larger diameter than an extent of a cross section of the shaft perpendicularly to the axis.

According to embodiments, a position of the device may be continuously adjustable along the axis. This may for instance be achieved by means of the shaft being press fit in the through hole over at least a portion of shaft. The position of the device may be continuously adjustable along at least a portion of the shaft.

According to embodiments, the device, in a motion position is movable to shift the surface element from the axis towards a wall portion of the container. In this manner the device may be further used as a scraper in the container.

According to embodiments, the surface element may comprise a convex surface facing the rotor element. In this manner the surface element may be suitably shaped for touching foodstuff from within a rotating vortex.

According to embodiments, the device may comprise a handle at an end opposite to the surface element. In this manner the device may be easily positioned in a desired position by a user.

According to embodiments, the container unit may be removably connected to the base unit and a coupling arrangement may form a separable connection between the electric motor and the rotor element.

Further features of, and advantages with, the present invention will become apparent when studying the appended claims and the following detailed description. Those skilled in the art will realize that different features of the present invention may be combined to create embodiments other than those described in the following, without departing from the scope of the present invention, as defined by the appended claims.

### BRIEF DESCRIPTION OF THE DRAWINGS

The various aspects of the invention, including its particular features and advantages, will be readily understood from the following detailed description and the accompanying drawings, in which:
Fig. 1 illustrates a mixer household appliance according to embodiments,
Figs. 2a, 2b, 3, 4a, and 4b illustrate cross sections of a container units of a mixer according to embodiments.

### DETAILED DESCRIPTION

The present invention will now be described more fully with reference to the accompanying drawings, in which example embodiments are shown. However, this invention should not be construed as limited to the embodiments set forth herein. Disclosed features of example embodiments may be combined as readily understood by one of ordinary skill in the art to which this invention belongs. Like numbers refer to like elements throughout.

Well-known functions or constructions will not necessarily be described in detail for brevity and/or clarity.

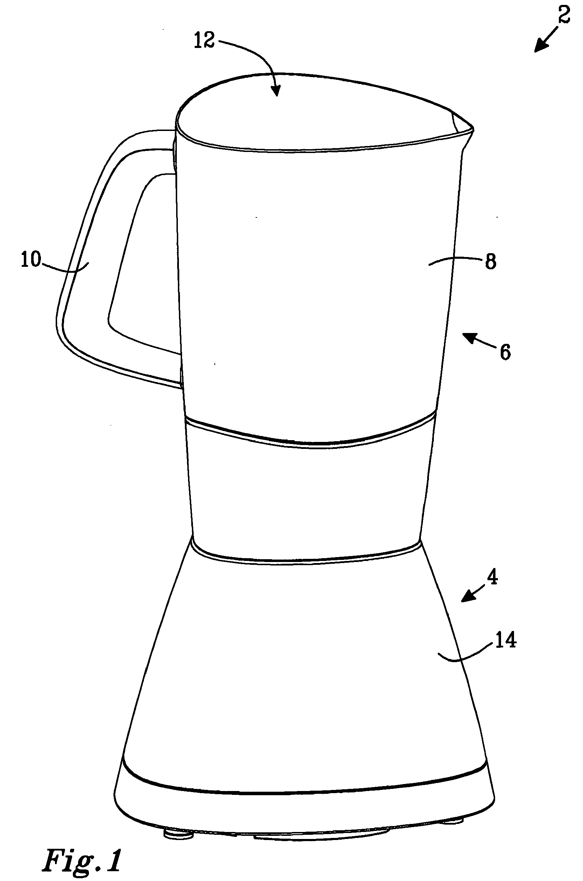

**Fig. 1** illustrates a mixer household appliance **2**, in the following called mixer **2**, according to embodiments. The mixer 2 comprises a base unit **4** and a container unit **6**. The container unit 6 comprises a container **8** in which foodstuff is placed, e.g. to be mixed, cut, and/or blended. The container unit 6 is releasably connected to the base unit 4. A handle **10** is provided on the container unit 6. A lid (not shown) may be placed on the container unit 6 to cover an opening **12** of the container 8 to hold foodstuff inside the container 8, e.g. during mixing. The base unit 4 forms a support for the mixer 2. The base unit 4 may be placed on a supporting surface during operation of the mixer 2. The base unit 4 comprises a housing **14**, inside which an electric motor is arranged. The electric motor is arranged to drive a rotor element arranged inside the container unit 6. The base unit 4 may further comprise a switch (not shown) for controlling the electric motor and a power cord (not shown) for connecting the electric motor to an electric wall socket.

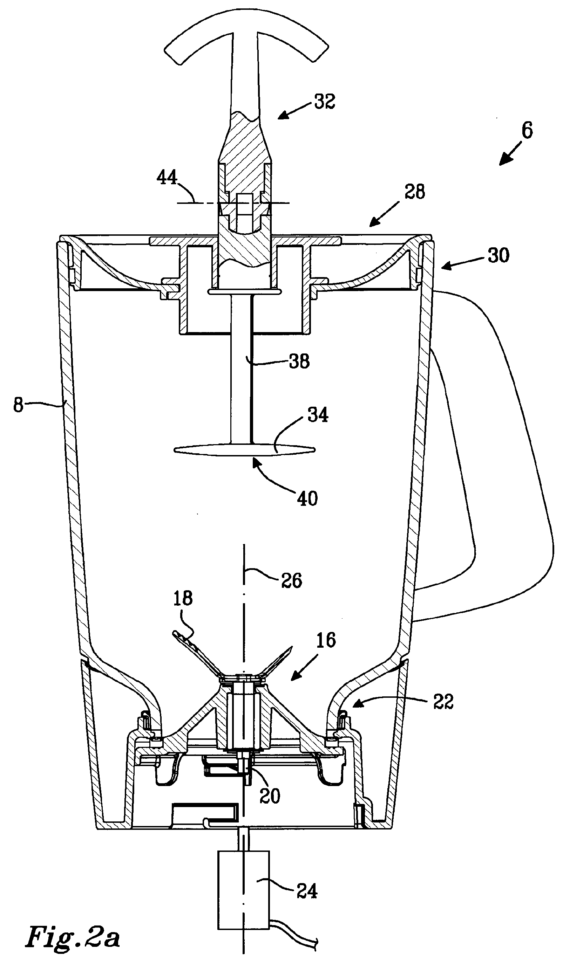

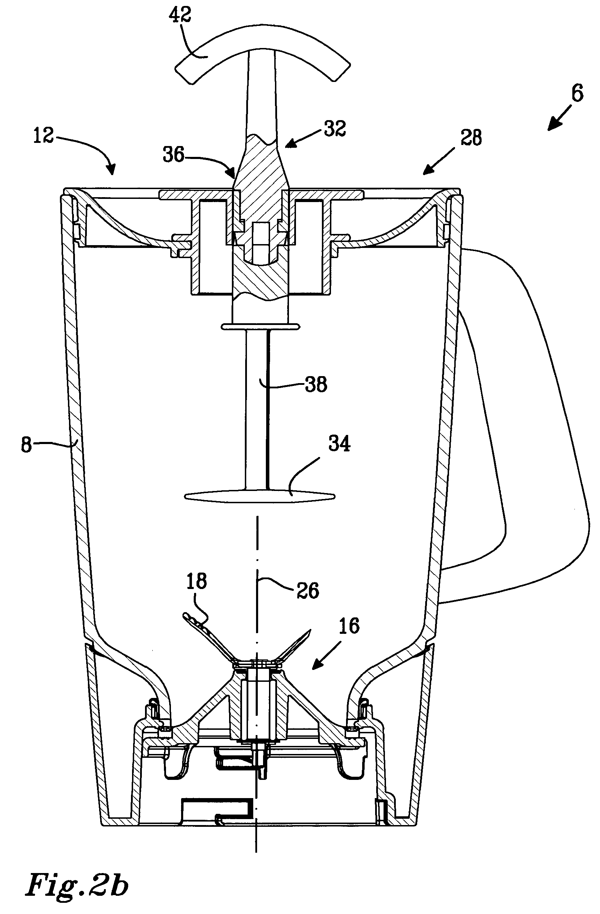

**Figs. 2a** **and** **2b** illustrate cross sections of a container unit 6 of a mixer according to embodiments. The container unit 6 comprises a container 8 in which foodstuff may be placed. A rotor **16** comprises a rotor element **18** and a rotor axle **20**. The rotor element 18 is arranged inside the container 8 at a first end **22** of the container unit 6. An electric motor **24** of a base unit (not shown) is arranged to rotate the rotor 16 and the rotor element 18 about an axis **26**.

A lid **28** covers an opening 12 at a second end **30** of the container unit 6. The lid 24 is removable form the container unit 6. A device **32** extends into the container 8 via the lid 24 and comprises a surface element **34** extending in a direction substantially perpendicularly to the axis 26. The device 32 is arranged to be fixedly positioned in at least a first position and a second position in a through hole **36** of the lid 28. In the first position of the device 32, the surface element 34 is arranged at a first distance from the rotor element 18 inside the container 8. The first position of the device 32 is illustrated in Fig. 2a. In the second position of the device 32, the surface element 34 is arranged at a second distance from the rotor element 18 inside the container 8. The second position of the device 32 is illustrated in Fig. 2b. In the first position and in the second position of the device 32 the surface element 34 is arranged along the axis 26.

The device 32 comprises a shaft **38** extending through the through hole 36 of the lid 28. The shaft 38 movably arranged in the through hole 36. The surface element 34 is substantially circular with a lager diameter than an extent of a cross section of the shaft 38 perpendicularly to the axis 26. In short, the shaft 38 has a smaller diameter than the surface element 34. The surface element 34 comprises a convex surface **40** facing the rotor element 18. The device 32 comprises a handle **42** at an end opposite to the surface element 34. A user may thus grab the handle 42 to adjust a position of the device 32 in the container 8.

Along a portion of the shaft 38, it is arranged with a press fit in the through hole 36. Thus, the device 32 may be positioned in the first and the second positions. Furthermore, a position of the device 32 is continuously adjustable at least along the portion of the shaft 38. A position of the device 32 may be continuously adjustable along the axis 26. The shaft 38 of the device 32 is foldable along a folding axis **44**. During storing of the container unit 6 in an assembled state, the height of the container unit 6, may thus be reduced by folding the shaft 38 about the folding axis 44.

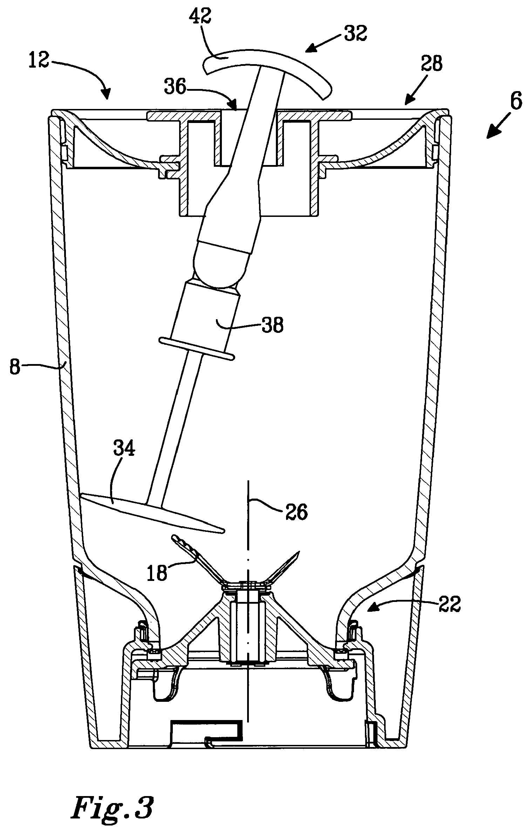

**Fig. 3** illustrates a cross section of a container unit 6 of a mixer according to embodiments. The container unit 6 comprises a container 8 in which foodstuff may be placed. A rotor element 18 is arranged to be rotated about an axis 26 inside the container 8 at a first end 22 of the container unit 6. A lid 28 covering an opening 12 of the container 8, comprises a through hole 36. A device 32 extends into the container 8 via the through hole 36 and comprises a surface element 34. The device 32 is arranged to be fixedly positioned in at least a first position and a second position along the axis 26 in the through hole 36.

The device 32 comprises a shaft 38. The shaft 38 has a narrow portion at an end opposite to the surface element 34. This narrow portion has a smaller diameter than the through hole 36. Thus, when the device 32 is positioned in the through hole 36 such that the narrow portion is arranged within the though hole 36, as illustrated in Fig. 3, the device is in a motion position. In the motion position the device 32 is movable to shift the surface element 34 from the axis 26 towards a wall portion of the container 8. In this manner the device 32 may be used as a scraper, e.g. to push foodstuff towards the first end 22 of the container unit 6. A handle 42 of the device 32 arranged to abut against the lid 28 when the device 32 is fully pushed into the container 8 may prevent the surface element 34 from reaching the rotor element 18.

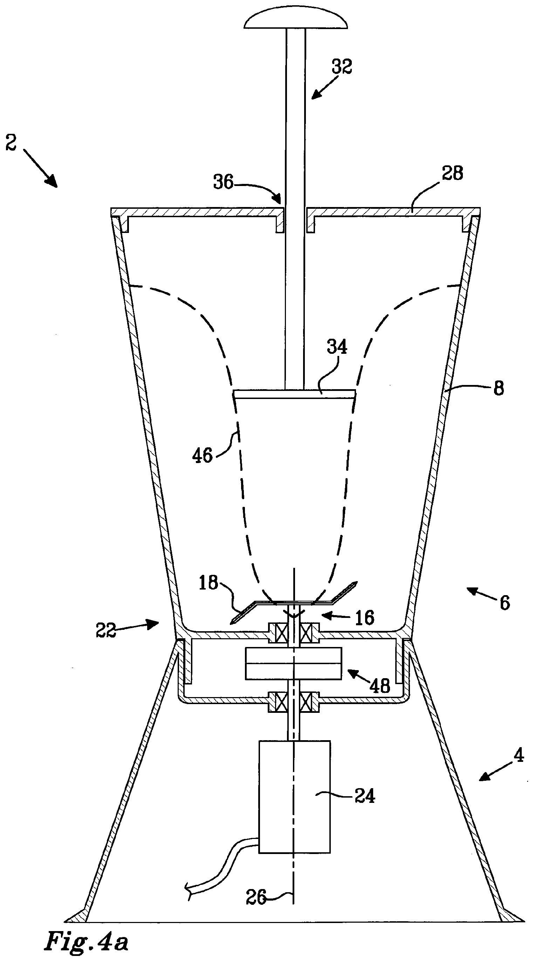

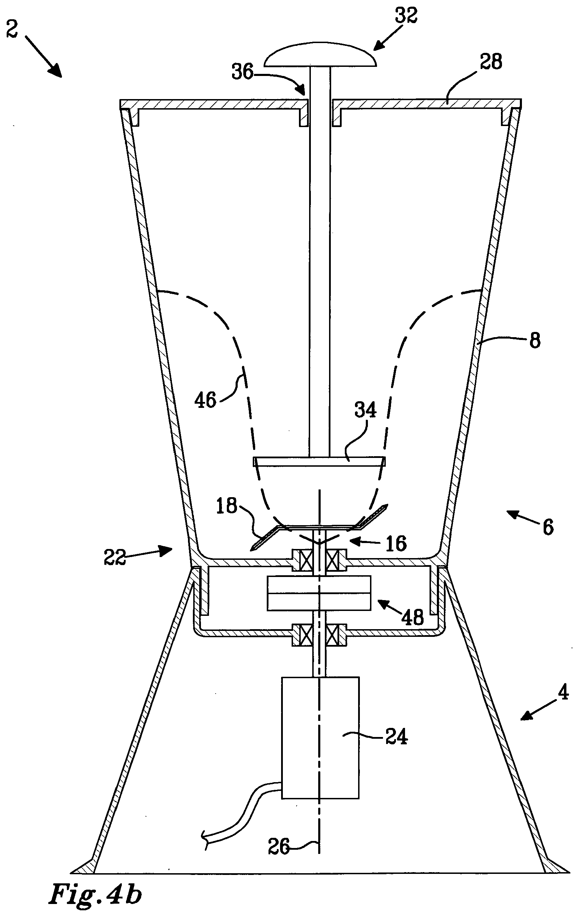

**Figs. 4a** **and** **4b** illustrate cross sections of a mixer 2 according to embodiments. The mixer 2 comprises a base unit 4 and a container unit 6. The container unit 6 comprises a container 8 in which foodstuff may be placed. The container unit 6 further comprises a rotor 16, which rotor 16 comprises a rotor element 18. The rotor element 18 is arranged inside the container 8 at a first end 22 of the container unit 6. The base unit 4 comprises an electric motor 24 arranged to rotate the rotor 16 about an axis 26.

A device 32 extends into the container 8 via a lid 28 of he container unit 8. The device 32 comprises a surface element 34 extending in a direction substantially perpendicularly to the axis 26. The device 32 is arranged to be fixedly positioned at different positions in a through hole 36 of the lid 28 such that the surface element 34 may be positioned at different distances from the rotor element 18. A position of the device 32 may be continuously adjustable along the axis 26 but at least the device 32 is able to be positioned with the surface element 34 in at least a first position and a second position. Thus, the surface element 34 may be positioned to close off a vortex **46** formed in foodstuff being rotated by the rotor element 18 inside the container 8. A user may position the device 32 such that an open connection from a bottom of the vortex 46 to a top of the vortex 46 is closed. In this manner noise emitted from the rotor element 18 is prevented from propagating through the cone of air formed inside the vortex 46 of foodstuff. Thus, the noise level from the mixer 2 may be reduced by about 2 dB in some operating situations compared to if the vortex would not be closed off.

In Fig. 4a the device 32 is illustrated in a first position, in which the surface element 34 is arranged at a first distance from the rotor element 18. In Fig. 4b the device 32 is illustrated in a second position, in which the surface element 34 is arranged at a second distance from the rotor element 18. In Fig. 4a the vortex 46 is formed in a larger amount of foodstuff than the vortex 46 formed in Fig. 4b. Accordingly, the first position of the device, in which the surface element 34 is at a greater distance from the rotor element 18 than in the second position, may be suitable when there is a large amount of foodstuff in the container 8 and the second position may be suitable when there is a medium or small amount of foodstuff inside the container 8.

The container unit 6 is removably connected to the base unit 4 and a coupling arrangement **48** forms a separable connection between the electric motor 24 and the rotor 16 with the rotor element 18.

Example embodiments described above may be combined as understood by a person skilled in the art. Although the invention has been described with reference to example embodiments, many different alterations, modifications and the like will become apparent for those skilled in the art. The lid 28 may for instance comprise one or more parts, which parts may be separable. The shaft 38 may have a round, oval, square, or any other suitable cross section. The through hole 36 may have a corresponding cross section. The device may be fixedly positioned in the first position and the second position and/or in further positions by other means than a press fit between the shaft of the device and the through hole of the lid. For instance, the shaft may be snap fit to the lid in the through hole in the different positions, the shaft may be fixed in a relevant position by means of one or more screws or pins, or the shaft may be fixed to the lid by means of a hook-and-loop fastening system (Velcro).

As used herein, the term "comprising" or "comprises" is open-ended, and includes one or more stated features, elements, steps, components or functions but does not preclude the presence or addition of one or more other features, elements, steps, components, functions or groups thereof.

## Claims

1. A mixer household appliance (2) comprising a container unit (6) and a base unit (4), which base unit (4) comprises a housing (14) and an electric motor (24), and which container unit (6) comprises a container (8) for foodstuff and a rotor element (18) arranged inside the container (8) at a first end (22) of the container unit (6), wherein the electric motor (24) is arranged to rotate the rotor element (18) about an axis (26), and wherein the appliance (2) further comprises a lid (28) for at least partially covering an opening (12) at a second end (30) of the container unit (6) and a device (32), the device (32) extending into the container (8) via the lid (28) and comprising a surface element (34) extending in a direction substantially perpendicularly to the axis (26),
**characterized in that** the device (32) is arranged to be fixedly positioned in at least a first position and a second position, wherein in the first position of the device (32) the surface element (34) is arranged at a first distance from the rotor element (18) inside the container (8), and wherein in the second position of the device (32) the surface element (34) is arranged at a second distance from the rotor element (18) inside the container (8).

2. The appliance (2) according to claim 1, wherein in the first position and in the second position of the device (32) the surface element (34) is arranged along the axis (26).

3. The appliance (2) according to claim 1 or 2, wherein the device (32) comprises a shaft (38) and the lid (28) comprises a through hole (36), which shaft (38) extends through the through hole (36), and wherein the shaft (38) is movably arranged in the through hole (36).

4. The appliance (2) according to claim 3, wherein the shaft (38) is arranged with a press fit in the through hole (36).

5. The appliance (2) according to claim 3 or 4, wherein the shaft (38) is foldable.

6. The appliance (2) according to any one of claims 3 - 5, wherein the surface element (34) is substantially circular with a lager diameter than an extent of a cross section of the shaft (38) perpendicularly to the axis (26).

7. The appliance (2) according to any one of the preceding claims, wherein a position of the device (32) is continuously adjustable along the axis (26).

8. The appliance (2) according to any one of the preceding claims, wherein the device (32) in a motion position is movable to shift the surface element (34) from the axis (26) towards a wall portion of the container (8).

9. The appliance (2) according to any one of the preceding claims, wherein the surface element (34) comprises a convex surface (40) facing the rotor element (18).

10. The appliance (2) according to any one of the preceding claims, wherein the device (32) comprises a handle (42) at an end opposite to the surface element (34).

11. The appliance (2) according to any one of the preceding claims, wherein the container unit (6) is removably connected to the base unit (4) and a coupling arrangement (48) forms a separable connection between the electric motor (24) and the rotor element (18).

## Patentansprüche

1. Haushaltsmixer (2), der eine Behältereinheit (6) und eine Basiseinheit (4) umfasst, wobei die Basiseinheit (4) ein Gehäuse (14) und einen Elektromotor (24) umfasst, und wobei die Behältereinheit (6) einen Behälter (8) für Lebensmittel und ein Rotorelement (18) umfasst, das im Inneren des Behälters (8) an einem ersten Ende (22) der Behältereinheit (6) angeordnet ist, wobei der Elektromotor (24) angeordnet ist, um das Rotorelement (18) um eine Achse (26) in Drehung zu versetzen, und wobei der Mixer (2) weiterhin einen Deckel (28), um eine Öffnung (12) an einem zweiten Ende (30) der Behältereinheit (6) mindestens teilweise abzudecken, sowie eine Vorrichtung (32) umfasst, wobei sich die Vorrichtung (32) über den Deckel (28) in den Behälter (8) hineinerstreckt und ein Oberflächenelement (34) umfasst, das sich in einer im Wesentlichen senkrecht zur Achse (26) verlaufenden Richtung erstreckt,
**dadurch gekennzeichnet, dass** die Vorrichtung (32) angeordnet ist, um in mindestens einer ersten Position und einer zweiten Position fest positioniert zu werden, wobei in der ersten Position der Vorrichtung (32) das Oberflächenelement (34) in einem ersten Abstand vom Rotorelement (18) im Inneren des Behälters (8) angeordnet ist, und wobei in der zweiten Position der Vorrichtung (32) das Oberflächenelement (34) in einem zweiten Abstand vom Rotorelement (18) im Inneren des Behälters (8) angeordnet ist.

2. Mixer (2) nach Anspruch 1, bei dem in der ersten Position und in der zweiten Position der Vorrichtung (32) das Oberflächenelement (34) entlang der Achse (26) angeordnet ist.

3. Mixer (2) nach Anspruch 1 oder 2, bei dem die Vorrichtung (32) eine Welle (38) umfasst und der Deckel (28) ein durchgehendes Loch (36) umfasst, wobei sich die Welle (38) durch das durchgehende Loch (36) erstreckt, und wobei die Welle (38) bewegbar im durchgehenden Loch (36) angeordnet ist.

4. Mixer (2) nach Anspruch 3, bei dem die Welle (38) mit einer Presspassung im durchgehenden Loch (36) angeordnet ist.

5. Mixer (2) nach Anspruch 3 oder 4, bei dem die Welle (38) faltbar ist.

6. Mixer (2) nach einem der Ansprüche 3 bis 5, bei dem das Oberflächenelement (34) im Wesentlichen kreisförmig ist und einen Durchmesser hat, der größer als eine Erstreckung eines Querschnitts der Welle (38) senkrecht zur Achse (26) ist.

7. Mixer (2) nach einem der vorstehend aufgeführten Ansprüche, bei dem eine Position der Vorrichtung (32) entlang der Achse (26) stufenlos verstellbar ist.

8. Mixer (2) nach einem der vorstehend aufgeführten Ansprüche, bei dem die Vorrichtung (32) in einer Bewegungsposition bewegbar ist, um das Oberflächenelement (34) von der Achse (26) hin zu einem Wandabschnitt des Behälters (8) zu verschieben.

9. Mixer (2) nach einem der vorstehend aufgeführten Ansprüche, bei dem das Oberflächenelement (34) eine dem Rotorelement (18) zugewandte konvexe Oberfläche (40) umfasst.

10. Mixer (2) nach einem der vorstehend aufgeführten Ansprüche, bei dem die Vorrichtung (32) einen Handgriff (42) an einem dem Oberflächenelement (34) entgegengesetzten Ende umfasst.

11. Mixer (2) nach einem der vorstehend aufgeführten Ansprüche, bei dem die Behältereinheit (6) entfernbar mit der Basiseinheit (4) verbunden ist und eine Verbindungsanordnung (48) eine trennbare Verbindung zwischen dem Elektromotor (24) und dem Rotorelement (18) bildet.

## Revendications

1. Appareil ménager de mélange (2) comprenant une unité formant réceptacle (6) et une unité formant socle (4), ladite unité formant socle (4) comprenant un boîtier (14) et un moteur électrique (24), et ladite unité formant réceptacle (6) comprenant un réceptacle (8) pour des aliments et un élément formant rotor (18) disposé à l'intérieur du réceptacle (8) au niveau d'une première extrémité (22) de l'unité formant réceptacle (6), le moteur électrique (24) étant conçu pour faire tourner l'élément formant rotor (18) autour d'un axe (26), et l'appareil (2) comprenant en outre un couvercle (28) servant à recouvrir au moins partiellement une ouverture (12) au niveau d'une seconde extrémité (30) de l'unité formant réceptacle (6) et un dispositif (32), le dispositif (32) s'étendant dans le réceptacle (8) à travers le couvercle (28) et comprenant un élément formant surface (34) s'étendant dans une direction essentiellement perpendiculaire à l'axe (26),
**caractérisé en ce que** le dispositif (32) est conçu pour être placé de manière fixe dans au moins une première position et une seconde position, l'élément formant surface (34) étant disposé, dans la première position du dispositif (32), à une première distance de l'élément formant rotor (18) à l'intérieur du réceptacle (8), et l'élément formant surface (34) étant disposé, dans la seconde position du dispositif (32), à une seconde distance de l'élément formant rotor (18) à l'intérieur du réceptacle (8).

2. Appareil (2) selon la revendication 1, dans lequel, dans la première position et dans la seconde position du dispositif (32), l'élément formant surface (34) est disposé le long de l'axe (26).

3. Appareil (2) selon la revendication 1 ou 2, dans lequel le dispositif (32) comprend un arbre (38) et le couvercle (28) comprend un trou traversant (36), ledit arbre (38) s'étendant à travers le trou traversant (36), et dans lequel l'arbre (38) est disposé de manière mobile dans le trou traversant (36).

4. Appareil (2) selon la revendication 3, dans lequel l'arbre (38) est disposé avec ajustement serré dans le trou traversant (36).

5. Appareil (2) selon la revendication 3 ou 4, dans lequel l'arbre (38) est pliable.

6. Appareil (2) selon l'une quelconque des revendications 3 à 5, dans lequel l'élément formant surface (34) est essentiellement circulaire et présente un diamètre supérieur à une étendue d'une section transversale de l'arbre (38) perpendiculairement à l'axe (26).

7. Appareil (2) selon l'une quelconque des revendications précédentes, dans lequel une position du dispositif (32) peut être ajustée de façon continue le long de l'axe (26).

8. Appareil (2) selon l'une quelconque des revendications précédentes, dans lequel le dispositif (32), dans une position de mouvement, peut être déplacé afin de décaler l'élément formant surface (34) vis-à-vis de l'axe (26) en direction d'une partie de paroi du réceptacle (8).

9. Appareil (2) selon l'une quelconque des revendications précédentes, dans lequel l'élément formant surface (34) comprend une surface convexe (40) située face à l'élément formant rotor (18).

10. Appareil (2) selon l'une quelconque des revendications précédentes, dans lequel le dispositif (32) comprend une poignée (42) au niveau d'une extrémité opposée à l'élément formant surface (34).

11. Appareil (2) selon l'une quelconque des revendications précédentes, dans lequel l'unité formant réceptacle (6) est raccordé de manière amovible à l'unité formant socle (4) et un système d'accouplement (48) forme un raccordement séparable entre le moteur électrique (24) et l'élément formant rotor (18).
